# EUROPEAN PATENT SPECIFICATION

(11) **EP 0 405 544 B1**
(45) Date of publication and mention of the grant of the patent: **08.02.1995**
(21) Application number: 90112345.5
(22) Date of filing: 28.06.1990
(51) Int. Cl.: D01F 9/10, C04B 35/56, C04B 35/80, D01F 9/08

(54) **Method of manufacturing sintered body of silicon carbide**
Verfahren zur Herstellung eines gesinterten Körpers aus Siliciumcarbid
Procédé de fabrication d'un corps fritté de carbure de silicium

(30) Priority: 30.06.1989 JP 166930/89
(43) Date of publication of application: 02.01.1991
(73) Proprietor: NIPPON CARBON CO., LTD., Tokyo (JP)
(72) Inventor: Ichikawa, Hiroshi, C/o Nippon Carbon CO. Ltd, Tokyo (JP); Imai, Yoshikazu, C/o Nippon Carbon CO. Ltd, Tokyo (JP)
(74) Representative: Schmidt-Evers, Jürgen, Dipl.-Ing.

(56) References cited:
- EP-A- 0 030 105
- FR-A- 2 329 611

## Description

This invention relates to a method of manufacturing a sintered body of silicon carbide which has a superior bending strength.

As a method of manufacturing a sintered body of silicon carbide, there have been known heretofore, for example, a method of adding to silicon carbide powders a sintering agent such as boron, carbon, boron carbide or aluminum nitride and then heat-treating the mixture at a temperature of 1800 to 2200° C in an atmosphere of an inert gas, and a method of adding to silicon carbide powders or silicon carbide fibers a binder such as polycarbosilane, polysilane or polysilazane and then heat-treating the mixture at a temperature of 1200 to 1500° C in an atmosphere of an inert gas.

However, in the former method, i.e., in the case of using a sintering agent, it is rather difficult to uniformly disperse the sintering agent into the antimelt-treated substance. Further, there is a problem in that it is difficult to obtain a sintered body of silicon carbide which is superior in heat resistivity.

On the other hand, in the latter method, i.e., in the case of adding a binder to the silicon carbide powders or silicon carbide fibers, the binder is decomposed during the heat treatment, and consequently the ratio of conversion into silicon carbide decreases; it is difficult to obtain silicon carbide of high density, resulting in a lowered bonding force among the powders or fibers. As a result, there is a problem in that the bending strength of the sintered body of the silicon carbide thus obtained decreases.

It is an object of this invention to solve the problems of the prior art methods and to provide a method of manufacturing a sintered body of silicon carbide which has a superior bending strength.

According to the present invention there are provided two methods of manufacturing a sintered body of silicon carbide which are characterized by the steps as defined in claims 1 and 2.

Although it has already become known from the FR-A-2329 611 to produce sintered bodies having silicon carbides using fibers of silicon carbide, the process described therein differs considerably from the present invention and can therefore not suggest the claimed procedure, as the following points will show:

The art disclosed in the reference is a method in which silicon carbide fibers are mixed with carbide ceramics and/or nitride ceramics in a powdery form, and (further by adding a binder where necessary) they are then pressed and heated to obtain a heat-resistant ceramics composite material. In the reference, it is also disclosed (p. 6, lines 5 to 10) that due to the mutual diffusion of the SiC and the matrix of the sintered composite and to the diffusion of the free carbon into the matrix of the reaction of the free carbon with the matrix, a strong bonding of the SiC with the matrix is formed.

On the contrary, according to the first embodiment of the invention of the present application, a fiber of silicon carbide containing a particular ratio of oxygen is sintered without the addition of other compounds such as ceramics (of course, without the addition of additives). In this manner, a sintered body having superior characteristics, especially high-temperature mechanical properties as shown in the exemplified embodiments is obtained. It follows that the first embodiment of the invention and the art in the reference are apparently different from each other in the above-described points. Further, the reference does not at all technically imply the parameters of the method according to claim 1.

According to the second embodiment of the present application, the silicon carbide fiber is caused to contain a particular ratio of oxygen, and a thin layer of amorphous carbon is formed on the surface of the silicon carbide fiber by heating it either in a specific procedure or a medium. Then, a silicon powder (neither carbide nor nitride) is added and sintered. In this manner, a sintered body having superior characteristics like in the first embodiment is obtained. This method is clearly distinguishable from the method of the reference. The method according to claim 2 was therefore not suggested by the FR-A-2 329 611 either.

As the organosilicon high molecular compound having a main skeleton of silicon and carbon polycarbosilane, polydimethylsilane, polymethylphenylsilane, and the like having average molecular weight of 1000 - 3000 and the following molecular formulas polycarbosilane: 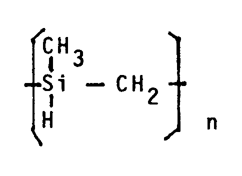
polydimethylsilane: 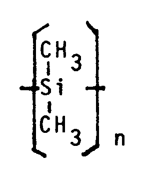
polymethylphenylsilane: 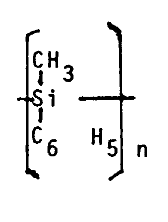
can be used.

As a compound obtained by polymerization of an organometallic compound and the organosilicon high molecular compound, polytitanocarbosilane: 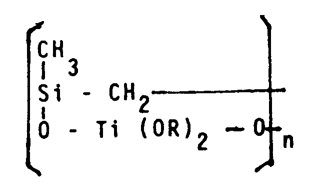
which is obtained by polymerization of polycarbosilane and alkoxytitan (organometallic compound), polyzirconocarbosilane: 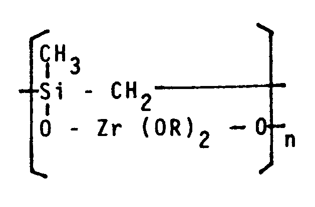
which is obtained by polymerization of polycarbosilane and alkoxylzircon (organometallic compound), and the like can be used.

According to the first step of the present invention the organosilicon high molecular compound or compound obtained by polymerization of an organometallic compound and the organosilicon high molecular compound is melted into a fiber (range of individual filament diameter 15 - 25 »m). As used herein the term fiber is intended to mean single filaments or a plurality of filaments, sometimes referred to herein as a yarn, which can be spun or twisted. The fibers of silicon carbide are normally used by constituting them into an aggregative yarn (or tow) of 200 to 6000 filaments/yarn (or tow).

The temperature at which the antimelt-treatment is performed in an atmosphere of an oxidizing gas after the above-mentioned organosilicon high molecular compound or the compound obtained by polymerization of the organometallic compound and the organosilicon high molecular compound is melted into a fiber is generally about 130 to 200° C. The time for the treatment is generally about 5 minutes to 10 hours, and air or oxygen gas can be used as the oxidizing gas.

The temperature at which the heat treatment is performed in an atmosphere of an inert gas subsequent to the above-mentioned antimelt-treatment, is generally about 900 to 1500° C, and the time therefor is generally 10 to 40 hours. As the inert gas, argon gas, nitrogen gas or the like is used. By the above-mentioned treatments, fibers of silicon carbide whose filament diameters are 3 to 200 »m are obtained, the fibers being composed of 40 to 70 % by weight of silicon, 20 to 40 % by weight of carbon and 2 to 20% by weight of oxygen and being mainly constituted by amorphous fine particles.

The temperature at which the heat treatment is performed in an atmosphere of a mixture of an inert gas and a hydrocarbon gas subsequent to the above-mentioned antimelt-treatment, is generally about 1000 to 1200° C. and the time therefor is generally 10 to 40 hours. As the gas mixture, such a gas is used as is obtained by mixing about 0.1 to 10 % by volume of a hydrocarbon gas such as methane gas, ethane gas, propane gas, and the like with an inert gas such as argon gas, nitrogen gas, and the like. By the above-mentioned treatments, fibers of silicon carbide whose filament diameters are 3 to 200 »m are obtained, the fibers being composed of 40 to 70 % by weight of silicon, 20 to 40% by weight of carbon and 2 to 20% by weight of oxygen and being mainly constituted by amorphous fine particles and having a thin coating layer (film) of amorphous carbon on the surfaces thereof.

The fibers of silicon carbide which are obtained through each of the above-mentioned treatments and which contain a limited oxygen content, can be sintered without adding a binder or an agent. The reason why the oxygen content of the fibers of the silicon carbide is maintained within 2 to 20 % by weight is that when the oxygen content of the fibers of silicon carbide is below 2% by weight, bonding becomes impossible in the heating and sintering under pressure in the atmosphere of inert gas; and when the oxygen content in the fibers of silicon carbide is above 20 % by weight, too many voids occur in the heating and sintering under pressure in the atmosphere of an inert gas, thereby causing a decrease in the strength of the sintered body of silicon carbide.

The reason why the temperature at which the heating of the fibers of silicon carbide containing 2 to 20 % by weight of oxygen in the atmosphere of an inert gas is maintained within 1400 to 2100°C, and the reason why the sintering thereof is performed at a pressure of 300 to 3000 bar (kg/cm²)are that when the temperature and the pressure are lower than these ranges, sufficient strengths of the fibers cannot be obtained; and when the temperature and the pressure exceed these ranges, the particles of silicon carbide become too coarse, resulting in a decrease in strength. The time of heating the fibres of silicon carbide under pressure in the atmosphere of the inert gas should be about 30 to 300 minutes. As the inert gas, argon gas, helium gas, or the like is used.

As the silicon powder to be mixed with the fibers of silicon carbide which are heat-treated in the atmosphere of the mixed gas and have a coating layer (or film) of amorphous carbon thereon, a powder of average particle size of about 0.3 to 50 »m is used. The amount of addition of the silicon powder is generally about 0.1 to 20 % by weight, based on the weight of the silicon carbide fibers.

By heating and sintering the fibers of silicon carbide containing 2 to 20 % by weight of oxygen, in an atmosphere of an inert gas under pressure, a sintered body of silicon carbide is formed.

By adding silicon powder to the fibers of silicon carbide containing 2 to 20% by weight of oxygen and having a layer (or film) of amorphous carbon on the surfaces thereof, and then heating and sintering them under pressure in an atmosphere of an inert gas, the amorphous carbon and silica appear to react together to form a sintered body of silicon carbide.

Embodiment examples of the method of this invention are explained hereinbelow together with comparative examples.

### EMBODIMENT EXAMPLE 1

Polycarbosilane (having an average molecular weight of 2200 and a melting point of 240° C) was melted and spun into a yarn, and then heated at 160° C for 10 minutes in atmospheric air to perform an antimelt-treatment. Then the spun yarn was further heated at 1000° C for 8 hours in an atmosphere of nitrogen gas to obtain a yarn of fibers of silicon carbide in which the diameter of individual fibers (filament diameter) was 12 »m and which consisted of 500 filaments/yarn. An aggregate of fibers obtained by parallelly arranging together 2000 yarns of the fibers of silicon carbide as prepared above was set in a graphite mold and was heated at a temperature of 2000° C at a pressure of 1000 bar (kg/cm²) for 180 minutes in an atmosphere of argon gas to obtain a sintered body of silicon carbide in plate form of 60mm x 80mm in size and 2mm in thickness.

The oxygen content of the fibers of silicon carbide prepared according to the above-mentioned method as well as the bending strength of the sintered body of the silicon carbide at room temperature and at high temperature were measured. The results are given in Table 1.

The oxygen content of the fibers of silicon carbide was measured by a fully automatic oxygen and nitrogen analyzing apparatus (made by Horiba Seisakusho). The bending strength at room temperature (25°C) of the sintered body of silicon carbide was measured by an Instron type testing machine, and its bending strength at high temperature was measured by the Instron type testing machine by heating the sintered body of silicon carbide to a temperature of 1600°C in an atmosphere of argon gas.

### EMBODIMENT EXAMPLE 2

A sintered body of silicon carbide in the form of a plate of 60mm x 80mm in size and 2mm in thickness was prepared using the same method as in EMBODIMENT TABLE 1 except that the temperature of the antimelt-treatment was 170° C, and its duration was 20 minutes.

The oxygen content of the fibers of silicon carbide and the bending strength of the sintered body of silicon carbide at room temperature as well as at high temperature were measured by the same means as in EMBODIMENT EXAMPLE 1. The results are given in Table 1.

### EMBODIMENT EXAMPLE 3

A sintered body of silicon carbide in the form of a plate of 60mm x 80mm in size and 2mm in thickness was prepared using the same method as in EMBODIMENT EXAMPLE 1 except that the temperature of the antimelt-treatment was 180° C, and its duration was 25 minutes.

The oxygen content of the fibers of silicon carbide and the bending strength of the sintered body of silicon carbide at room temperature as well as at high temperature were measured by the same means as in EMBODIMENT EXAMPLE 1. The results are given in Table 1.

### EMBODIMENT EXAMPLE 4

A sintered body of silicon carbide in the form of a plate of 60mm x 80mm in size and 2mm in thickness was prepared using the same method as in EMBODIMENT EXAMPLE 1 except that the temperature of the antimelt-treatment was 200° C, and its duration was 40 minutes.

The oxygen content of the fibers of silicon carbide and the bending strength of the sintered body of silicon carbide at room temperature as well as at high temperature were measured by the same means as in EMBODIMENT EXAMPLE 1. The results are given in Table 1.

### COMPARATIVE EXAMPLE 1

A sintered body of silicon carbide in the form of a plate of 60mm x 80mm in size and 2mm in thickness was prepared using the same method as in EMBODIMENT EXAMPLE 1 except that the temperature of the antimelt-treatment was 150° C and its duration was 10 minutes.

The oxygen content of the fibers of silicon carbide and the bending strength of the sintered body of silicon carbide at room temperature as well as at high temperature were measured by the same means as in EMBODIMENT EXAMPLE 1. The results are given in Table 1.

### COMPARATIVE EXAMPLE 2

A sintered body of silicon carbide in the form of a plate of 60mm x 80mm in size and 2mm in thickness was prepared using the same method as in EMBODIMENT EXAMPLE 1 except that the temperature of the antimelt-treatment was 210° C, and its duration was 50 minutes.

The oxygen content of the fibers of silicon carbide and the bending strengths of the sintered body of silicon carbide at room temperature as well as at high temperature were measured by the same method as in EMBODIMENT EXAMPLE 1. The results are given in Table 1.

**Table 1**

| | -Oxygen content (% by wt) | Bending strength, room temp. (bar kg/mm²) | Bending strength, 1600°C (bar kg/mm²) |
|---|---|---|---|
| EMBODIMENT EXAMPLE 1 | 2 | 0.6 60 | 0.32 32 |
| EMBODIMENT EXAMPLE 2 | 8 | 0.8 80 | 0.68 68 |
| EMBODIMENT EXAMPLE 3 | 12 | 0.82 82 | 0.70 70 |
| EMBODIMENT EXAMPLE 4 | 20 | 0.66 66 | 0.35 35 |
| COMPARATIVE EXAMPLE 1 | 1.7 | (not measurable) | |
| COMPARATIVE EXAMPLE 2 | 22 | 0.45 45 | 0.08 8 |

As can be seen from the data of Table 1, it has been found that the sintered bodies of silicon carbide prepared by the methods of EMBODIMENT EXAMPLES 1, 2, 3 and 4 in which the oxygen content of the fibers of silicon carbide was within the range according to this invention, had excellent bending strengths. On the contrary, the sintered bodies of silicon carbide prepared by the methods of COMPARATIVE EXAMPLES 1 and 2 in which the oxygen content of the fibers of silicon carbide was outside the range according to the present invention, had lower bending strengths. Especially, the bonding of the fibers was insufficient in the sintered body of silicon carbide in COMPARATIVE EXAMPLE 1 in which the oxygen content of the fibers of silicon carbide was 1.7% by weight, so that the bending strength could not be measured. As a consequence, it has been confirmed that, by maintaining the oxygen content of the fibers of silicon carbide within the range of 2 to 20 % by weight, a sintered body of silicon carbide having an excellent bending strength can be obtained.

### EMBODIMENT EXAMPLE 5

Polycarbosilane (having an average molecular weight of 2200 and a melting point of 240° C) was melted and spun into a yarn, and then heated at 170° C for 60 minutes in atmospheric air to perform an antimelt-treatment. Then it was further heated at 1000° C for 8 hours in an atmosphere of nitrogen gas, and a yarn of fibers of silicon carbide in which the diameter of individual fibers (filament diameter) was 12 »m and which consisted of 500 filaments/yarn containing 10% by weight of oxygen was prepared. An aggregate of fibers obtained by parallelly arranging together 2000 yarns of the fibers of silicon carbide as prepared above was set in a graphite mold and was heated at a temperature of 2000° C at a pressure of 1000 bar (kg/cm²)for 180 minutes in an atmosphere of argon gas to obtain a sintered body of silicon carbide in plate form of 60mm x 80mm in size and 2mm in thickness.

The density and the bending strength at room temperature and at high temperature of the sintered body of the silicon carbide which was prepared by the above-mentioned method were measured. The results are given in Table 2.

The density was measured by means of a pyonometer. The bending strengths at room temperature and at high temperature were measured in accordance with the measuring method used in EMBODIMENT EXAMPLE 1.

### EMBODIMENT EXAMPLE 6

As a mold, a cylindrical core of graphite having an external diameter of 500mm and a length of 1000mm, and an external form of silica glass having an internal diameter of 504mm and a length of 1000mm were used. A sintered body of silicon carbide in a cylindrical form of 500mm in internal diameter, 1000mm in length and 2mm in thickness was prepared according to the same method as used in EMBODIMENT EXAMPLE 5 except that the treating conditions in the mold were changed to a temperature of 1900° C and a pressure of 2000 bar (kg/cm²) and a processing time of 120 minutes.

The density and the bending strength at room temperature and at high temperature of the sintered body of silicon carbide thus obtained were measured by the same means as in EMBODIMENT EXAMPLE 5. The results are given in Table 2.

### EMBODIMENT EXAMPLE 7

A sintered body of silicon carbide in plate form of 60mm x 80mm in size and 2mm in thickness was prepared using the same method as EMBODIMENT EXAMPLE 5 except that polytitanocarbosilane (having an average molecular weight of 2000 and a melting point of 180° C) was used in place of polycarbosilane.

The oxygen content in the fibers of silicon carbide was 18% by weight.

The density and the bending strength at room temperature and at high temperature of the sintered body of silicon carbide thus obtained were measured by the same means as in EMBODIMENT EXAMPLE 5. The results are given in Table 2.

### EMBODIMENT EXAMPLE 8

Polycarbosilane (having an average molecular weight of 2200 and a melting point of 240° C) was melted and spun into a yarn, and then heated at 180° C for 90 minutes in atmospheric air to perform an antimelt-treatment. Then the yarn was further heated at 1000° C for 8 hours in an atmosphere of nitrogen gas and was still further heated at 1200° C for 2 hours in an atmosphere of a mixture of 0.5% by volume of propane gas and 99.5% by volume of nitrogen gas. A yarn of fibers of silicon carbide in which the diameter of individual fibers (filament diameter) is 12 »m and which consisted of 500 filaments/yarn containing 10% by weight of oxygen was prepared, each of the fibers being coated on its surface with a thin layer (or film) of amorphous carbon. The obtained yarn of fibers of silicon carbide was chopped into lengths of 30mm. A mixture obtained by adding 5 parts by weight of a silicon powder (having an average particle diameter of 0.3 micron meter) to 100 parts by weight of fibers of silicon carbide and mixing them together, was set into a mold of graphite and was then heated at 1800° C for 180 minutes at a pressure of 1500 bar (kg/cm²)to obtain a sintered body of plate form of 60mm x 80mm in size and 1.5mm in thickness.

The density and the bending strength at a room temperature and at high temperature of the sintered body of silicon carbide thus obtained were measured by the same means as in EMBODIMENT EXAMPLE 5. The results are given in Table 2.

### EMBODIMENT EXAMPLE 9

A sintered body of silicon carbide in plate form of 60mm x 80mm in size and 2mm in thickness was prepared using the same method as in EMBODIMENT EXAMPLE 8 except that polytitanocarbosilane (having an average molecular weight of 2000 and a melting point of 180° C) was used in place of polycarbosilane.

The oxygen content in the fibers of the silicon carbide was 20% by weight.

The density and the bending strength at room temperature and at high temperature of the sintered body of silicon carbide thus obtained were measured by the same means as in EMBODIMENT EXAMPLE 5. The results are given in Table 2.

### COMPARATIVE EXAMPLE 3

A sintered body of silicon carbide of plate form of 60mm x 80mm in size and 2mm in thickness was prepared using the same method as EMBODIMENT EXAMPLE 5 except that the sintering temperature and the pressure were changed to 1300° C and 250 bar (kg/cm²), respectively.

The density and the bending strength at room temperature and at high temperature of the sintered body of silicon carbide thus obtained were measured by the same means as in EMBODIMENT EXAMPLE 5. The results are given in Table 2.

### COMPARATIVE EXAMPLE 4

About 2000 yarns of the same fibers of silicon carbide as were used in EMBODIMENT EXAMPLE 1 were parallelly arranged, and 30% by weight of polycarbosilane was added thereto as a binder. They were then set in a mold of graphite and heated in an atmosphere of argon gas at 1800° C and 1200 bar (kg/cm²) for 180 minutes to obtain a sintered body of silicon carbide of plate form of 60mm x 80mm in size and 2mm in thickness.

The density and the bending strength at room temperature and at high temperature of the sintered body of silicon carbide thus obtained were measured by the same means as in EMBODIMENT EXAMPLE 5. The results are given in Table 2.

### COMPARATIVE EXAMPLE 5

The density and the bending strength at room temperature and at high temperature of a sintered body of silicon carbide commercially available on the market in which B₄C was used as a sintering agent, were measured by the same means as in EMBODIMENT EXAMPLE 5. The results are given in Table 2.

**Table 2**

| | Density (g/cm³) | Bending strength, room temp. (bar kg/mm²) | Bending strength, 1600°C (bar kg/mm²) |
|---|---|---|---|
| EMBODIMENT EXAMPLE 5 | 3.1 | 0.80 80 | 0.70 70 |
| EMBODIMENT EXAMPLE 6 | 3.1 | 0.73 73 | 0.61 61 |
| EMBODIMENT EXAMPLE 7 | 3.1 | 0.67 67 | 0.35 35 |
| EMBODIMENT EXAMPLE 8 | 3.1 | 0.80 80 | 0.74 74 |
| EMBODIMENT EXAMPLE 9 | 3.1 | 0.70 70 | 0.61 61 |
| COMPARATIVE EXAMPLE 3 | 2.9 | 0.38 38 | 0.12 12 |
| COMPARATIVE EXAMPLE 4 | 2.9 | 0.40 40 | 0.16 16 |
| COMPARATIVE EXAMPLE 5 | 3.1 | 0.55 55 | 0.20 20 |

As can be seen from the data of Table 2, the sintered bodies of silicon carbide prepared according to the methods of EMBODIMENT EXAMPLES 5, 6, 7, 8 and 9 of this invention were found to have superior bending strengths. On the contrary, the sintered body of silicon carbide which was prepared according to the method of COMPARATIVE EXAMPLE 3 and in which the temperature and the pressure during the final heating step in the atmosphere of the inert gas were outside the ranges according to the present invention, and the sintered body of silicon carbide prepared in the COMPARATIVE EXAMPLE 4 by the conventional method had both lower bending strengths as well as lower densities. The sintered body of silicon carbide of COMPARATIVE EXAMPLE 5 which is commercially available on the market was found to have a lower bending strength, and particularly, a remarkably lower bending strength at high temperature, although it has a density equivalent to that of the sintered body of silicon carbide which was prepared according to the method of this invention.

## Claims

1. A method of manufacturing a sintered body of silicon carbide comprising the steps of:
(a) heating an organosilicon high molecular compound having a main skeleton of silicon and carbon which is selected of the group consisting of polycarbosilane, polydimethylsilane or polymethylphenylsilane or a mixture of said compound with a compound obtained by the polymerization of said organosilicon with an organometallic compound, said polymerization product being selected from the group consisting of polytitanocarbosilane and polyzirconocarbosilane, to obtain a melt,
(b) forming a yarn comprising a bundle of fibers from the melt,
(c) heating the bundle of fibers at 130 to 200°C in an atmosphere of an oxidizing gas to antimelt-treat the fibers,
(d) heating the bundle of antimelt-treated fibers at 900 to 1500°C in an atmosphere of an inert gas to obtain a bundle of silicon carbide fibers, said fibers containing 2 to 20% by weight of oxygen,
(e) heating and sintering the silicon carbide fibers in an atmosphere of an inert gas at a temperature of 1400 to 2100°C and at a pressure of 300 to 3000 bar (kg/cm²).

2. A method of manufacturing a sintered body of silicon carbide comprising the steps of:
(a) heating an organosilicon high molecular compound having a main skeleton of silicon and carbon which is selected of the group consisting of polycarbosilane, polydimethylsilane or polymethylphenylsilane or a mixture of said compound with a compound obtained by the polymerization of said organosilicon with an organometallic compound, said polymerization product being selected from the group consisting of polytitanocarbosilane and polyzirconocarbosilane, to obtain a melt,
(b) forming a yarn comprising a bundle of fibers from the melt,
(c) heating the bundle of fibers at 130 to 200°C in an atmosphere of an oxidizing gas to antimelt-treat the fibers,
(d') heating the bundle of antimelt-treated fibers at 1000 to 1200°C in an atmosphere of an inert gas mixed with a hydrocarbon gas to obtain a bundle of silicon carbide fibers, said fibres containing 2 to 20% by weight of oxygen, and having on the surface thereof a thin layer of amorphous carbon,
(f) mixing said bundle of silicon carbide fibers with a silicon powder and
(g) heating the bundle of silicon carbide fibers mixed with silicon powder in an atmosphere of an inert gas at a temperature of 1400 to 2100°C at a pressure of 300 to 3000 bar (kg/cm²) to react the amorphous carbon on the silicon carbide fibers with the silicon powder and form the sintered body of silicon carbide.

3. The method according to claim 1 or 2, wherein the step of antimelt-treating (c) is carried out for a time of from 5 minutes to 10 hours.

4. The method according to claim 1, wherein the step of heating of the antimelt-treated fiber (d) is carried out for a time of from 10 to 40 hours.

5. The method according to claim 2, wherein the step of heating of the antimelt-treated fiber (d') is carried out for a time of from 10 to 40 hours.

## Patentansprüche

1. Verfahren zur Herstellung eines gesinterten Körpers aus Siliciumcarbid, umfassend die Stufen:
(a) Erhitzen einer hochmolekularen, eine Hauptkette aus Silicium und Kohlenstoff aufweisenden Organosiliciumverbindung, die aus der Gruppe ausgewählt ist, die von Polycarbosilan, Polydimethylsilan oder Polymethylphenylsilan oder einer Mischung derselben mit einem Polymerisationsprodukt, das durch Polymerisation von diesen Organosiliciumverbindungen mit einer Organometallverbindung erhalten und aus der Gruppe der Polytitanocarbosilane und Polyzirkoncarbosilane ausgewählt ist, gebildet wird, zur Gewinnung einer Schmelze,
(b) Bildung eines ein Bündel von Fasern umfassenden Garns aus der Schmelze,
(c) Erhitzen des Faserbündels auf 130 bis 200° C in einer Atmosphäre von einem oxydierenden Gas zur Antischmelzbehandlung der Fasern,
(d) Erhitzen des Bündels von den antischmelzbehandelten Fasern auf 900 bis 1500° C in einer Atmosphäre von einem inerten Gas unter Erhalt eines Bündels von Siliciumcarbidfasern, die 2 bis 20 Gew.-% Sauerstoff enthalten,
(e) Erhitzen und Sintern der Siliciumcarbidfasern in einer Atmosphäre von einem inerten Gas bei einer Temperatur von 1400 bis 2100° C und einem Druck von 300 bis 3000 Bar (kg/cm²).

2. Verfahren zur Herstellung eines gesinterten Körpers aus Siliciumcarbid, umfassend die Stufen:
(a) Erhitzen einer hochmolekularen, eine Hauptkette aus Silicium und Kohlenstoff aufweisenden Organosiliciumverbindung, die aus der Gruppe ausgewählt ist, die von Polycarbosilan, Polydimethylsilan oder Polymethylphenylsilan oder einer Mischung derselben mit einem Polymerisationsprodukt, das durch Polymersiation von diesen Organosiliciumverbindungen mit einer Organometallverbindung erhalten und aus der Gruppe der Polytitanocarbosilane und Polyzirkonocarbosilane ausgewählt ist, gebildet wird, zur Gewinnung einer Schmelze,
(b) Bildung eines ein Bündel von Fasern umfassenden Garns aus der Schmelze,
(c) Erhitzen des Faserbündels auf 130 bis 200° C in einer Atmosphäre von einem oxydierenden Gas zur Antischmelzbehandlung der Fasern,
(d') Erhitzen des antischmelzbehandelten Faserbündels auf 1000 bis 1200° C in einer Atmosphäre von einem inerten Gas in Abmischung mit einem Kohlenwasserstoffgas unter Erhalt eines Bündels von Siliciumcarbidfasern, die 2 bis 20 Gew.-% Sauerstoff enthalten und auf der Oberfläche eine dünne Schicht von amorphem Kohlenstoff aufweisen,
(f) Vermischen des Bündels aus den Siliciumcarbidfasern mit einem Siliciumpulver,
(g) Erhitzen des mit dem Siliciumpulver vermischten Bündels der Siliciumcarbidfasern in einer Atmosphäre von einem inerten Gas bei einer Temperatur von 1400 bis 2100° C und einem Druck von 300 bis 3000 Bar (kg/cm²) zur Umsetzung des amorphen Kohlenstoffs mit den Siliciumcarbidfasern und Bildung des gesinterten Körpers aus Siliciumcarbid.

3. Verfahren gemäß Anspruch 1 oder 2, wobei die Antischmelzbehandlung gemäß (c) während einer Zeit von 5 Minuten bis 10 Stunden durchgeführt wird.

4. Verfahren gemäß Anspruch 1, wobei die Stufe des Erhitzens der antischmelzbehandelten Fasern gemäß (d) während einer Zeit von 10 bis 40 Stunden durchgeführt wird.

5. Verfahren gemäß Anspruch 2, wobei die Stufe des Erhitzens der antischmelzbehandelten Fasern gemäß (d') während einer Zeit von 10 bis 40 Stunden durchgeführt wird.

## Revendications

1. Procédé de fabrication d'un corps fritté en carbure de silicium comprenant les étapes de:
(a) chauffage d'un composé organosilicié de poids moléculaire élevé ayant un squelette principal en silicium et en carbone qui est choisi dans le groupe consistant en polycarbosilane, polydiméthylsilane ou polyméthylphénylsilane ou un mélange dudit composé avec un composé obtenu par polymérisation dudit composé organosilicié avec un composé organo-métallique, ledit produit de polymérisation étant choisi dans le groupe consistant en polytitanocarbosilane et polyzirconocarbosilane, pour obtenir une masse fondue,
(b) formation d'un fil comprenant un faisceau de fibres obtenues à partir de la masse fondue,
(c) chauffage du faisceau de fibres à une température comprise entre 130 et 200°C sous une atmosphère d'un gaz oxydant pour traiter les fibres contre la fusion,
(d) chauffage du faisceau de fibres traité contre la fusion à une température comprise entre 900 et 1500°C sous une atmosphère de gaz inerte pour obtenir un faisceau de fibres en carbure de silicium, lesdites fibres contenant de 2 à 20% en poids d'oxygène.
(e) chauffage et frittage des fibres en carbure de silicium sous une atmosphère d'un gaz inerte à une température de 1400 à 2100°C et à une pression de 300 à 3000 bar (kg/cm²).

2. Procédé de fabrication d'un corps fritté en carbure de silicium comprenant les étapes de:
(a) chauffage d'un composé organosilicié de poids moléculaire élevé ayant un squelette principal en silicium et en carbone qui est choisi dans le groupe consistant en polycarbosilane, polydiméthylsilane ou polyméthylphénylsilane ou un mélange dudit composé avec un composé obtenu par polymérisation dudit composé organosilicié avec un composé organo-métallique, ledit produit de polymérisation étant choisi dans le groupe consistant en polytitanocarbosilane et polyzirconocarbosilane, pour obtenir une masse fondue,
(b) formation d'un fil comprenant un faisceau de fibres obtenues à partir de la masse fondue,
(c) chauffage du faisceau de fibres à une température comprise entre 130 et 200°C sous une atmosphère d'un gaz oxydant pour traiter les fibres contre la fusion,
(d') chauffage du faisceau de fibres traité contre la fusion à une température comprise entre 1000 et 1200° C sous une atmosphère de gaz inerte mélangé à un gaz hydrocarboné pour obtenir un faisceau de fibres en carbure de silicium, lesdites fibres contenant de 2 à 20% en poids d'oxygène, et dont la surface extérieure est revêtue d'une mince couche de carbone amorphe.
(f) mélange dudit faisceau de fibres en carbure de silicium avec une poudre de silicium, et
(g) chauffage du faisceau de fibres en carbure de silicium mélangé à la poudre de silicium sous une atmosphère d'un gaz inerte à une température de 1400 à 2100°C et à une pression de 300 à 3000 bar (kg/cm²) pour faire réagir le carbone amorphe qui revêt les fibres en carbure de silicium avec la poudre de silicium et former un corps fritté en carbure de silicium.

3. Procédé selon la revendication 1 ou 2, dans lequel l'étape de traitement contre la fusion (c) est conduite pendant une durée de 5 minutes à 10 heures.

4. Procédé selon la revendication 1, dans lequel l'étape de chauffage de la fibre traitée contre la fusion (d) est conduite pendant une durée de 10 à 40 heures.

5. Procédé selon la revendication 2, dans lequel l'étape de chauffage de la fibre traitée contre la fusion (d') est conduite pendant une durée de 10 à 40 heures.
